# EUROPÄISCHE PATENTANMELDUNG

(11) **EP 1 522 216 A2**
(43) Veröffentlichungstag der Anmeldung: **13.04.2005**
(21) Anmeldenummer: 04022772.0
(22) Anmeldetag: 24.09.2004
(51) Int. Cl.: A01F 29/22, B24B 3/42

(54) **Erntemaschine, insbesondere selbstfahrender Feldhäcksler**

(30) Priorität: 29.09.2003 DE 10345251
(71) Anmelder: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)

(57) **Zusammenfassung**

Erntemaschine, insbesondere selbstfahrender Feldhäcksler (1) zum Aufnehmen und Häckseln von Mais, Anwelkgras, Grünfutter und dergleichen Erntegut, mit einer Häckseleinrichtung (6) und einer der Häckseleinrichtung (6) zugeordneten Schleifvorrichtung (12) mit einem Schleifwerkzeug zum Schleifen der Häckselmesser, wobei der Schleifvorrichtung (12) eine Einrichtung (13-18) zur Zuführung einer Flüssigkeit zugeordnet ist.

## Beschreibung

Die Erfindung betrifft eine Erntemaschine, insbesondere einen selbstfahrenden Feldhäcksler zum Aufnehmen und Häckseln von Mais, Anwelkgras, Grünfutter und dergleichen Erntegut nach dem Oberbegriff des Anspruchs 1. Derartige Erntemaschinen werden vielfach zum Ernten und gebrauchsfertigen Zerkleinern verschiedenartigen Ernteguts verwendet. Beim Betrieb der Feldhäcksler nutzen sich die Messer der Häckseleinrichtung mit der Zeit ab. Dieser Verschleiß kann je nach Erntegut, Verschmutzungsgrad des Ernteguts und Ausführung der Häckselmesser sehr stark variieren. Ebenso sind auch die Intervalle für das Nachschleifen der Häckselmesser unterschiedlich lang. Üblicherweise sind Feldhäcksler mit einer Schleifvorrichtung für die Häckselmesser ausgerüstet, damit das Nachschleifen ohne Demontage der Häckselmesser jederzeit durchgeführt werden kann.

Derartige Schleifvorrichtungen sind in diversen Ausführungsformen mit manueller oder vollautomatischer Steuerung bekannt. Bei Feldhäckslern mit Trommelhäckseleinrichtungen wird bevorzugt bei gleichzeitiger Drehung der Häckseltrommel ein Schleifstein entlang einer Führung über die Breite der Trommel bewegt, wobei der Schleifstein soweit zugestellt und laufend nachgestellt wird, dass er Kontakt mit den Häckselmessern hat. Ausführungen mit zusätzlich drehend angetriebenen Schleifsteinen sind ebenfalls Stand der Technik.

Allen bekannten Ausführungsformen von Schleifvorrichtungen an Feldhäckslern sind jedoch folgende Nachteile gemein. Bei allen wird durch das Nachschleifen der Häckselmesser die Häckseleinrichtung und das Umfeld der Schleifvorrichtung und damit auch das nachfolgende Erntegut stark durch Schleifstaub verschmutzt. Der Schleifvorgang verursacht außerdem einen starken unkontrollierten Funkenflug, der in Verbindung mit trockenen Erntegutresten und

Staubablagerungen schnell zur Brandgefahr werden kann. Des weiteren ist bei ungleichmäßig verschlissenen Häckselmessern mangels Kühlung der Schleifstelle ein Überhitzen der Bereiche besonders großen Abtrags möglich, was zu Materialverspannungen mit eventuellen Rissen und zu vorzeitigem Verschleiß führen kann.

Die Aufgabe der Erfindung besteht demgegenüber darin, eine Erntemaschine, insbesondere Feldhäcksler mit einer Schleifvorrichtung dahingehend weiterzubilden, dass die zuvor genannten Nachteile vermieden werden und eine bessere Standzeit der Häckselmesser und des Schleifwerkzeugs erreicht wird.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, dass zumindest während des Schleifvorgangs der Schleifstelle eine Flüssigkeit zugeführt wird, wodurch das Schleifen im Nassschleifverfahren durchgeführt wird. Dieses Verfahren bringt viele Vorteile mit sich, so wird durch die Flüssigkeit z. B. der Schleifstaub gebunden und abgeführt. Die Häckseleinrichtung und das Umfeld der Schleifvorrichtung werden nicht mehr verunreinigt und damit auch nicht das nachfolgende Erntegut. Des weiteren wird durch das Nassschleifen der ansonsten starke, unkontrollierte Funkenflug unterbunden, womit eine große Brandgefahr durch Entzündung von trockenen Erntegutresten und Staubablagerungen wirkungsvoll verhindert wird.

Eine besonders vorteilhafte Auswirkung der Erfindung ist die Verbesserung der Standzeiten sowohl vom Schleifwerkzeug als auch von den Häckselmessern durch eine gleichmäßige Kühlung der Schleifstelle und eine wesentlich verbesserte Selbstreinigung des Schleifwerkzeugs.

Die Flüssigkeit, die unter anderem zur Kühlung dient, kann einfaches klares Wasser, ein spezielles Kühlschmiermittel für Schleifarbeiten, welches zumindest noch annähernd fließfähig ist, oder auch Wasser mit Zusätzen wie z. B. Korrosionsschutzmittel sein. Ein Korrosionsschutzmittel hätte zusätzlich noch die vorteilhafte Wirkung der Konservierung der durch den Einsatz der Maschine metallisch blanken farbfreien Bauteile der Häckseleinrichtung bis zum Ende des Auswurfkrümmers. Wenn vor einer längeren Stillstandszeit der Maschine die Häckselmesser geschliffen werden, ist diese Wirkung besonders vorteilhaft nutzbar. Eine manuelle Betätigung der Kühleinrichtung nur zur Konservierung der Maschinenbauteile ist ebenso denkbar.

Die Zuführung der Flüssigkeit kann auf vielfältige Art und Weise erfolgen. Denkbar ist eine sehr einfache Anlage mit einem Vorratsbehälter aus dem über einen Schlauch die Flüssigkeit nach manueller oder automatischer Freigabe durch Schwerkraft auf die Schleifstelle läuft. Bei einer weiteren Ausführungsform ist ebenso eine gezielte Zuführung über Pumpen und Druckdüsen denkbar. Eine besonders gleichmäßige und flüssigkeitssparende Benetzung kann durch einen Sprühnebel erreicht werden.

Ein weiterer positiver Nebeneffekt der erfindungsgemäßen Ausführung einer Schleifvorrichtung ist die geräusch- und vibrationsdämpfende Wirkung der Flüssigkeit auf den Schleifprozess.

Die vorliegende Erfindung ist an einer Vielzahl von Häckseleinrichtungen mit zu schärfenden Messern verwendbar. Sie kann insbesondere an selbstfahrenden oder gezogenen Erntemaschinen mit Häckseltrommeln oder Scheibenradhäckslern benutzt werden.

Weitere Vorteile und Einzelheiten der Erfindung ergeben sich aus den Unteransprüchen und der nachfolgenden Beschreibung einer in den Zeichnungen dargestellten Ausführungsform der Erfindung. Es zeigt:
**Fig. 1** eine Seitenansicht eines Ausführungsbeispieles eines selbstfahrenden Feldhäckslers,
**Fig. 2** eine perspektivische Ansicht auf die Baugruppe Häckseltrommel mit Schleifvorrichtung eines Feldhäckslers nach Fig. 1

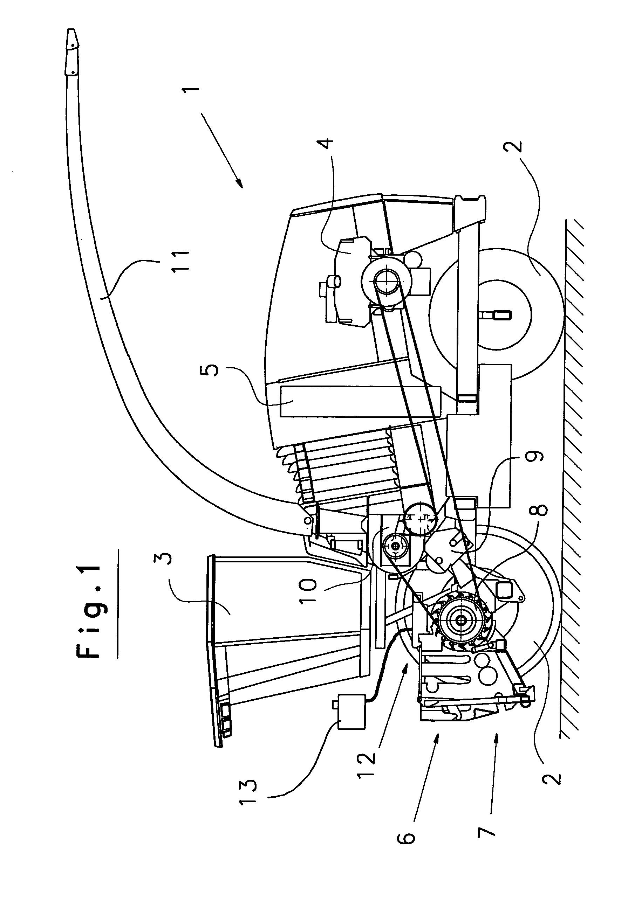

Der in Fig. 1 dargestellte selbstfahrende Feldhäcksler 1 hat Räder 2, eine Kabine 3, einen Antriebsmotor 4 und eine zentrale Kühleinheit 5. Außerdem verfügt er über eine Häckseleinrichtung 6, welche im wesentlichen aus den Baugruppen Einzug 7, Häckseltrommel 8, Konditioniereinrichtung 9, Wurfgebläse 10 und Auswurfkrümmer 11 besteht. Des weiteren ist der dargestellte erfindungsgemäße Feldhäcksler mit einer Schleifvorrichtung 12 für das Nachschleifen der Häckselmesser 19 der Häckseltrommel 8 ausgerüstet, welcher aus dem Vorratsbehälter 13 eine Flüssigkeit zugeführt wird.

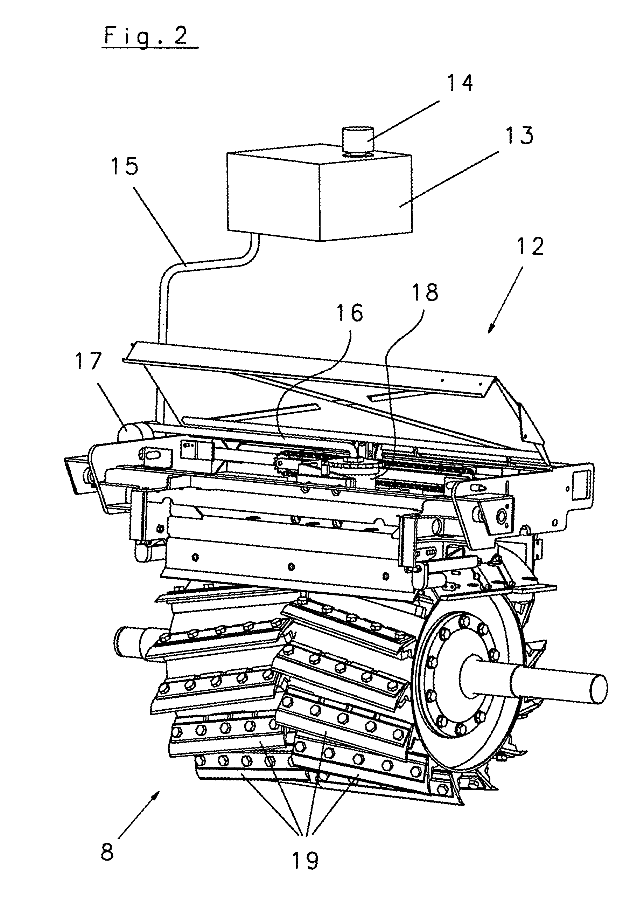

In der in Fig. 2 gezeigten perspektivischen Darstellung der Häckseltrommel 8 mit der dieser zugeordneten Schleifvorrichtung 12 des erfindungsgemäßen Ausführungsbeispiels des Feldhäckslers aus Fig. 1 ist deutlich die Zuführung der Flüssigkeit aus dem Tank 13 durch die Pumpe 14 über die Leitung 15, 16 direkt zur Schleifstelle zu erkennen. In diesem Beispiel ist die Leitung 15 als feste Rohrleitung bis zur Schlauchtrommel 17 ausgeführt. Die weitere Leitung 16 ist als Schlauchleitung ausgeführt, weil der Schleifwerkzeughalter 18 während des Schleifvorgangs entlang einer Führung über die Breite der Häckseltrommel 8 bewegt wird und die Flüssigkeitszuführung dieser Bewegung folgen muss. Dabei wird die Leitung 16 jeweils von der Schlauchtrommel 17 auf bzw. abgespult. Diese Ausführungsform der Flüssigkeitszuführung ermöglicht innerhalb der Schleifvorrichtung 12 eine besonders platzsparende Lösung. Dieses kommt den in diesem Bereich eines Feldhäckslers ohnehin beengten Platzverhältnissen sehr zugute. Durch die direkte Zuführung der Flüssigkeit zu dem innerhalb des Schleifwerkzeughalters 18 befindlichen Schleifstein und damit direkt zur Kontaktstelle des Schleifsteins mit den am Umfang der Häckseltrommel 8 angeordneten Häckselmessern 19, ist eine optimale Wirkung der Flüssigkeit mit allen zuvor beschriebenen Vorteilen gewährleistet.

## Patentansprüche

1. Erntemaschine, insbesondere selbstfahrender Feldhäcksler (1) zum Aufnehmen und Häckseln von Mais, Anwelkgras, Grünfutter und dergleichen Erntegut, mit einer mit Häckselmessern (19) ausgerüsteten Häckseleinrichtung (6) und einer der Häckseleinrichtung (6) zugeordneten Schleifvorrichtung (12) mit einem Schleifwerkzeug zum Schleifen der Häckselmesser (19), **dadurch gekennzeichnet, dass** der Schleifvorrichtung (12) eine Einrichtung zur Zuführung eines zumindest annähernd fließfähigen Mediums zugeordnet ist.

2. Erntemaschine nach Anspruch 1, **dadurch gekennzeichnet, dass** die Einrichtung zur Zuführung eines zumindest annähernd fließfähigen Mediums im wesentlichen einen Vorratsbehälter (13), eine Pumpe (14) und Leitungen (15, 16) umfasst.

3. Erntemaschine nach Anspruch 1, **dadurch gekennzeichnet, dass** das Medium über Schwerkraft zugeführt wird.

4. Erntemaschine nach einem oder mehreren der vorgehenden Ansprüche, **dadurch gekennzeichnet, dass** das Medium ein Kühlmittel, insbesondere Wasser ist.

5. Erntemaschine nach einem oder mehreren der vorgehenden Ansprüche, **dadurch gekennzeichnet, dass** das Medium direkt der Kontaktstelle zwischen Schleifwerkzeug und Häckselmesser (19) zugeführt wird.

6. Erntemaschine nach einem oder mehreren der vorgehenden Ansprüche, **dadurch gekennzeichnet, dass** das Medium indirekt über das Schleifwerkzeug der Kontaktstelle zwischen Schleifwerkzeug und Häckselmesser (19) zugeführt wird.

7. Erntemaschine nach einem oder mehreren der vorgehenden Ansprüche, **dadurch gekennzeichnet, dass** das Medium zerstäubt als Sprühnebel zugeführt wird.

8. Erntemaschine nach einem oder mehreren der vorgehenden Ansprüche, **dadurch gekennzeichnet, dass** das Medium ein Korrosionsschutzmittel ist.

9. Erntemaschine nach einem oder mehreren der vorgehenden Ansprüche, **dadurch gekennzeichnet, dass** die Zugabe des Mediums automatisch abhängig zum Schleifvorgang gesteuert wird.

10. Erntemaschine nach einem oder mehreren der vorgehenden Ansprüche, **dadurch gekennzeichnet, dass** die Zugabe des Mediums manuell unabhängig vom Schleifvorgang gesteuert werden kann.
